# EUROPÄISCHE PATENTSCHRIFT

(11) **EP 2 457 475 B1**
(45) Veröffentlichungstag und Bekanntmachung des Hinweises auf die Patenterteilung: **18.06.2014**
(21) Anmeldenummer: 11190458.7
(22) Anmeldetag: 24.11.2011
(51) Int. Cl.: A47J 31/00

(54) **Brühverfahren**
Brewing method
Procédé d'ébouillantage

(30) Priorität: 30.11.2010 DE 102010062180
(43) Veröffentlichungstag der Anmeldung: 30.05.2012
(73) Patentinhaber: WMF Württembergische Metallwarenfabrik AG, 73309 Geislingen/Steige (DE)
(72) Erfinder: Gussmann, Jochen, 73527 Schwäbisch-Gmünd (DE); Scheible, Wolfgang, 89173 Ettlenschiess (DE)
(74) Vertreter: BRP Renaud & Partner

(56) Entgegenhaltungen:
- EP-A1- 1 839 541
- EP-A2- 1 566 127

## Beschreibung

Die Erfindung betrifft ein Verfahren zum Brühen von Kaffee in einer Kaffeemaschine. Des Weiteren betrifft die Erfindung eine nach diesem Brühverfahren betriebene Kaffeemaschine.

Derzeit werden Kaffeemaschinen, insbesondere für den Einsatz in der Gastronomie, mit voreingestellten Kaffeemühlen ausgeliefert, wobei die Voreinstellung der Kaffeemühlen einem durchschnittlichen Mahlgrad entspricht, der mit einer erfahrungsgemäß viel verwendeten Kaffeebohne ermittelt worden ist. Bei der Installation oder Nachjustierung der Kaffeemaschine wird dann der Mahlgrad der Kaffeemühlen an die jeweils verwendeten Bohnen angepasst. Dazu kann die Wurfleistung der Mühlen ermittelt und mit den in der Kaffeemaschine abgespeicherten Rezepten abgeglichen werden. Dabei ist es derzeit schon möglich, dass eine derartige Optimierung für die Rezepte unterschiedlicher Kaffeebrühgetränke jeweils separat eingestellt wird. Für den Betrieb der Kaffeemaschine stehen dem Benutzer hinsichtlich der unterschiedlichen Rezepte weitere Parameter zur Einstellung der Qualität des Kaffeebrühgetränkes zur Verfügung, wie zum Beispiel eine Mehlmenge, eine Wassermenge, eine Brühtemperatur und die Art der Kaffeemehlvorbehandlung. Üblicherweise wird jedoch auf eine Veränderung des Mahlgrates während des laufenden Betriebes verzichtet. Die Kaffeemehlvorbehandlung kann in mehreren Qualitätsstufen angeboten werden, wobei je Qualitätsstufe bestimmte Parameter auf vordefinierte Werte eingestellt werden. Solche Parameter zur Einstellung der Qualitätsstufen der Kaffeemehlvorbehandlung können zum Beispiel ein Quellvolumen, eine Preinfusion, verschiedene Prozesszeiten, der Vorpressdruck und die Vorpresszeit sein.

Aus der EP 1 839 541 A1 ist ein Verfahren zur Zubereitung von Getränken bekannt, umfassend die Schritte des Einspeisens von Wasser in eine geschlossene Getränkezubereitungskammer; Öffnen der Kammer und Abgeben des zubereiteten Getränks aus einem Auslass der Kammer. Des Weiteren umfasst das bekannte Verfahren die Schritte: Einspeisen von Wasser in die Zubereitungskammer bis ein erster Druck von wenigstens drei bar erreicht ist, wenigstens einmaliges Unterbrechen des Flusses von Wasser zu der Zubereitungskammer, Beibehalten der Zubereitungskammer in einem geschlossenen Zustand bei dem ersten Druck für einen Druckhaltezeitraum innerhalb des Bereichs von 1 bis 60 Sekunden, Abgeben des so hergestellten Getränks.

Aus der EP 1 566 127 A2 ist ein Getränkesystem zum selektiven Ausgeben von kleinen Kaffeeflüssigkeitsextraktmengen und großen Kaffeeflüssigkeitsextraktmengen in der gleichen Kaffeeextraktionsvorrichtung bekannt, mit gemahlenen Kaffee enthaltenden Kapseln; einer Aufnahmevorrichtung zum Aufnehmen von Kapseln und einem Pumpmittel zum Unter-Druck-Einspritzen von Wasser in die Kapsel; Mitteln zum Öffnen der Kapsel, die ein Rückhaltemittel zum Zurückhalten der unter Druck stehenden Flüssigkeit in der Kapsel und ein Eingriffsmittel, das mit dem Rückhaltemittel zusammenwirkt, wobei das System mindestens eine erste Kapsel zum Ausgeben einer kleinen Kaffeeflüssigkeitsextraktmenge und mindestens eine zweite Kapsel aufweist, die im Wesentlichen die gleiche äußere Gestalt und Form wie die erste Kapsel hat, um in der gleichen Aufnahmevorrichtung wie die erste Kapsel aufgenommen werden zu können, und die dafür geeignet ist, eine größere Kaffeeflüssigkeitsextraktmenge auszugeben.

Aus der DE 196 29 239 A1 ist ein Brühverfahren zur Zubereitung von Kaffee bekannt, bei welchem erhitztes Wasser mit einer einstellbaren Anpresskraft durch ein Kaffeemehl gepresst wird. Die Anpresskraft wird dabei in Abhängigkeit von einer Durchflussgeschwindigkeit des Wassers durch das Kaffeemehl eingestellt, wobei eine tatsächlich gemessene Ist-Durchflussgeschwindigkeit des Wassers an eine vorgegebene Soll- Durchflussgeschwindigkeit angepasst wird, indem die Anpresskraft in Abhängigkeit von einer Soll-Ist-Abweichung der Durchflussgeschwindigkeit verändert wird.

Nachteilig an diesen herkömmlichen, derzeit üblichen Kaffeemaschinen ist die stufenweise Einstellung der Parameter in den vordefinierten Werten gemäß aus-wählbarer Qualitätsstufen. Des Weiteren sind diese vordefinierten Werte mit bestimmten Kaffeebohnen ermittelt. Werden nun andere Bohnen verwendet, können sich die verschiedenen Qualitätsstufen trotz optimal eingestellten Mahlgrades sehr abweichend verhalten. Dies kann sich in einem großen Brühzeitsprung niederschlagen, und da die Brühzeit unter anderem die Qualität des Kaffeebrühgetränkes beeinflusst, auch in einem dementsprechenden Qualitätssprung des Kaffees. Zudem unterliegt die in der Kaffeemaschine eingebaute Kaffeemühle auch einem gewissen Verschleiß, wodurch sich im Laufe der Benutzungszeit eine Mahlgradänderung einstellen kann. Aufgrund dieser verschleißbedingten Änderung des Mahlgrades können ebenfalls Schwankungen in der gewünschten Qualität des Kaffeebrühgetränkes auftreten, sowie auch zum Beispiel bei einem Wechsel der verwendeten Kaffeebohnen.

Die vorliegende Erfindung beschäftigt sich mit dem Problem, für eine Kaffeemaschine und ein dazugehöriges Brühverfahren eine verbesserte oder zumindest eine alternative Ausführungsform anzugeben, die sich insbesondere durch geringere Schwankungen in der gewünschten Qualität des Kaffees auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Ist-Brühzeit über eine (Nass-)Presskraft an eine Soll-Brühzeit anzupassen. Bei dem erfindungsgemäßen Verfahren zum Brühen von Kaffee in einer Kaffeemaschine, insbesondere in einer automatischen oder vollautomatischen Espressomaschine, werden während eines Mahlvorganges Kaffeebohnen durch eine Mahleinrichtung der Kaffeemaschine zu Kaffeemehl einer vorbestimmten Kaffeemehlmenge und/oder eines vorbestimmten Mahlgrades gemahlen, und während eines Pressvorganges das Kaffeemehl in der Kaffeemaschine unter einem bestimmten Pressdruck, das heißt unter einer vorbestimmten Presskraft verpresst. Ebenso wird während des Brühvorgangs eine auf eine vorbestimmte Brühtemperatur erhitzte, vorbestimmte Wassermenge durch das Kaffeemehl hindurchgeleitet und eine Ist-Brühzeit bestimmt, wobei die Ist-Brühzeit mit einer hinterlegten Soll-Brühzeit verglichen und durch Erhöhen/Reduzieren der Presskraft während des Brühvorgangs oder vor jedem neuen Brühen von Kaffee an die Soll-Brühzeit angepasst wird. Aufgrund der Anpassung der Presskraft vor jedem Pressvorgang kann die Brühzeit und somit die Kontaktzeit des Brühwassers mit dem Kaffeemehl, angepasst werden. Da die Brühzeit ein wichtiger Parameter für die Qualität des Kaffeebrühgetränkes ist, können somit vor jeder Brühung des Kaffeemehles die Qualität des Kaffeebrühgetränkes optimiert und somit sind die Schwankungen in der jeweils gewünschten Qualität des Kaffeebrühgetränkes verringert werden. Unter einem Kaffeebrühgetränk versteht man ein Brühgetränk, das durch Brühen von aus Kaffeebohnen gemahlenem Kaffeemehl hergestellt wird. Dabei wird ein solches Kaffeebrühgetränk im Sinne der Erfindung in einer Kaffeemaschine hergestellt, die zum einen eine Kaffeemühle aufweist, mit der die Kaffeebohnen zu Kaffeemehl gemahlen werden und bei der heißes Wasser unter einem vorbestimmten Druck durch das fein gemahlene Kaffeemehl hindurchgepresst wird. Üblicherweise kann ein derartig zubereitetes Kaffeebrühgetränk als Espresso bezeichnet werden. Dabei beträgt im Falle des Espressos die Wassertemperatur üblicherweise ca. 87 ± 7 °C und der Druck mit dem das heiße Wasser durch das Kaffeemehl gedrückt wird ca. 9 ± 3 bar. Bei dem Kaffeebrühverfahren, bei dem heißes Wasser mit hohem Druck durch sehr fein gemahlenes Kaffeemehl gepresst wird, entsteht ein konzentriertes Kaffeebrühgetränk, auf dem sich eine dichte, haselnussbraune Schaumschicht, die sogenannte Crema, ansammelt, die erheblich zu dem Aroma und der Qualität des Kaffeebrühgetränkes beiträgt.

Dem Sinne der Erfindung nach wird demzufolge ein Kaffeebrühgetränk in einer Kaffeemaschine in folgenden Schritten bzw. Vorgängen hergestellt:

In einem Mahlvorgang werden in der Kaffeemaschine bevorratete Kaffeebohnen unter einem vorbestimmten Mahlgrad und in einer vorbestimmten Kaffeemehlmenge zu Kaffeemehl vermahlen. Während der Kaffeemehlvorbehandlung kann eine Preinfusion von Wasser zum Kaffeemehl durchgeführt werden, wodurch das Kaffeemehl quillt. Während eines Pressvorganges wird das vorbefeuchtete Kaffeemehl unter einer vordefinierten Presskraft und einer vordefinierten Presszeit zu einem Presskuchen zusammengepresst. In dem nachfolgenden Brühvorgang wird eine vordefinierte Wassermenge, die auf eine vordefinierte Wassertemperatur erhitzt ist, durch diesen aus verpresstem Kaffeemehl hergestellten Presskuchen hindurchgedrückt, wobei die Brühzeit der Kontaktzeit des heißen Wassers mit dem verpressten Kaffeemehl entspricht. Vor der Zubereitung des Kaffees können üblicherweise an der Kaffeemaschine durch Auswahl einer Rezeptur bestimmte Parameter vorgegeben werden. Solche Parameter sind zum Beispiel ein Mahlgrad, eine Kaffeemehlmenge, eine Wassermenge, eine Brühzeit, ein Wasserstrom, ein Pressdruck, eine Presskraft, eine Brühtemperatur, ein Kaffeemehlvolumen, eine Wassermenge zur Vorbefeuchtung des Kaffeemehls, und/oder ein Quellvolumen. Aufgrund dieser vorgegebenen Parameter stellt sich dann die dementsprechend gewünschte Qualität des Kaffeebrühgetränkes ein. Dabei ist besonders die Brühzeit, also die Kontaktzeit von heißem Wasser und Kaffeemehl, ein entscheidender Faktor für die Qualität des Kaffeebrühgetränkes.

Durch Schwankungen innerhalb der vorgenannten Parameter kann es jedoch zu einer Schwankung der Brühzeit und zu einer dementsprechenden Schwankung der Qualität des Kaffeebrühgetränkes kommen. So ist es denkbar, dass zum Beispiel im Laufe der Zeit die Kaffeemühle aufgrund von Verschleiß nur noch einen unzureichenden Mahlgrad erzeugt. Ebenso kann es auch aufgrund von unterschiedlich verwendeten Kaffeebohnen zu einer Mahlgradschwankung kommen. Auch ist immer eine gewisse Streuung in der durch die Kaffeemühle hergestellten Kaffeemehlmenge zu erwarten, da die Dosierung der Bohnen naturgemäß eine Schwankung der Kaffeemehlmenge mit sich bringt. Demzufolge ist eine gewisse nicht erwünschte Schwankung der Brühzeit zu erwarten.

Durch die Erfindung ist es jedoch möglich, mittels des/der Pressdruckes/Presskraft mit dem das Kaffeemehl in dem Pressvorgang und vor dem Brühvorgang verpresst wird, die jeweils eingestellte und gewünschte Brühzeit zu steuern. Dabei wird die Brühzeit umso größer, je feiner der Mahlgrad ist und je höher der/die Pressdruck/Presskraft ist. Somit kann durch Einstellen der Presskraft während des Pressvorganges die Brühzeit während des Brühvorganges eingestellt und insbesondere an vordefinierte Optimalwerte angepasst werden.

Durch einen Vergleich der Ist-Brühzeit mit einer Soll-Brühzeit kann somit rückgeschlossen werden, wie die Presskraft des aktuellen Pressvorganges zu wählen ist, damit die Brühzeit des aktuellen Brühvorganges den gewünschten Wert einnimmt. Dadurch lassen sich Schwankungen der Kaffeemehlmenge, des Mahlgrades und der verwendeten Kaffeebohnen kompensieren. War dabei die Ist-Brühzeit im vergleich zu einer Soll-Brühzeit zu kurz, werden die Presskraft und damit der Pressdruck des aktuellen Pressvorganges erhöht. War jedoch beispielsweise die Brühzeit eines vergangenen Brühvorganges zu lang, wird die Presskraft des aktuellen Pressvorganges erniedrigt. Die dementsprechend angepasste Presskraft kann dann für die gewünschte Brühzeit bezüglich des jeweiligen Rezeptes abgespeichert werden. Somit kann die Brühzeit in Bezug zu dem jeweiligen spezifischen Rezept überwacht und bei Abweichung dementsprechend über eine Änderung der Presskraft angepasst werden.

Im laufenden Betrieb können somit jeweils die Brühzeiten zu den jeweiligen Rezepturen überwacht und mit den rezeptspezifisch eingestellten Zielwerten verglichen werden. Bei Abweichungen von der jeweiligen Zielvorgabe können über einen derartigen Regelkreis die Presskraft nachgestellt insgesamt konstante Brühzeiten erreicht werden.

Des Weiteren ist es möglich, das Kaffeemehlvolumen gegebenenfalls durch ein trockenes Verpressen nach dem Mahlvorgang und vor dem Pressvorgang bzw. vor der Preinfusion zu messen und aufgrund des ermittelten Kaffeemehlvolumens zum einen auf die Qualität der Kaffeemühle zu schließen und zum anderen das ermittelte Kaffeemehlvolumen bei der Einstellung der Presskraft zu berücksichtigen. Dadurch sind Schwankungen der durch die Kaffeemühle hergestellten Kaffeemehlmenge und gegebenenfalls eine Schwankung des Mahlgrades zumindest teilweise kompensierbar.

Des Weiteren ist die Brühzeit auch abhängig von dem Temperaturzustand der Kaffeemaschine. Je länger die Pause seit dem letzten Brühvorgang ist, desto größer ist die Abkühlung der Kaffeemaschine und umso kürzer wird die Brühzeit eines erneuten Brühvorganges sein. Zur Kompensation dieses Qualitätsverlustes kann in Abhängigkeit der Pausendauer die Presskraft erhöht werden. Vorteilhaft kann dadurch ebenfalls der Pausenabstand zwischen den einzelnen Brühvorgängen berücksichtigt werden.

Alle diese durch den Pressdruck bzw. die Presskraft kompensierbaren Schwankungen erfordert somit keinerlei Rezepturanpassungen, so dass die Qualität die Kaffeebrühgetränkes nicht wie derzeit üblich, über eine Anpassung der Rezeptur nachgeregelt wird.

Nun kann es auftreten, dass die Brühzeit eines aktuellen Brühvorganges trotz einer Nachregelung der Presskraft nicht den gewünschten Zielwert erreicht. In diesem Fall können Rückschlüsse auf die Mahlleistung bzw. den Mahlgrad der Kaffeemühle vorgenommen werden. Demzufolge kann durch die Kaffeemaschine selbständig der Mahlgrad und/oder die Kaffeemehlmenge angepasst werden. Dies wird bevorzugt dann durchgeführt, wenn aufgrund des Vergleichs eines Brühzeit-Pressdruck-Wertpaares eines aktuellen Brühvorganges im Vergleich mit einem Brühzeit-Pressdruck-Wertepaar aus einem Kennfeld und/oder mit einem Brühzeit-/Pressdruck-Wertepaar zumindest eines vorhergegangenen Brühvorganges ein vorbestimmter Abweichungsgrenzwert erreicht und/oder überschritten wird. Demzufolge kann, wenn die Brühzeit deutlich zu kurz ist, die Mehlmenge größer bzw. der Mahlgrad feiner nachgeregelt werden. Ist die Brühzeit deutlich zu lang, kann die Mehlmenge kleiner bzw. der Mahlgrad gröber gewählt werden. Diese automatisierte Regelung des Mahlgrades bzw. der Mehlmenge kann sowohl bei der Inbetriebnahme der Kaffeemaschine als auch bei der Nachjustierung angewendet werden. Demzufolge wird automatisch mittels zumindest einer Probezubereitung die Brühzeit bei dementsprechend eingestelltem Mahlgrad und/oder Kaffeemehlmenge und/oder Presskraft ermittelt, mit einem Sollwert der Brühzeit verglichen und der Mahlgrad und/oder die Mehlmenge und/oder die Presskraft für einen zukünftigen Brühvorgang eingestellt. Dadurch ist die Inbetriebnahme deutlich vereinfacht und notwendige Nachjustierungen werden von der Kaffeemaschine automatisiert vorgenommen.

Zudem ist es in diesem Fall möglich, das Kaffeebrühgetränk in verschiedenen Qualitätsstufen anzubieten. So ist es zum Beispiel möglich, mit kurzer Brühzeit einen schnellen Espresso wirtschaftlich herzustellen, während mit hoher Brühzeit ein langsamer Espresso in höchster Qualität hergestellt werden kann. Demzufolge sind auch mehrere Qualitätsstufen zwischen einem schnellen und einem langsamen Espresso denkbar.

Die verschiedenen vorab genannten Parameter können mittels Sensoren erfasst und ein Abgleich von Ist-/Sollwerten durchgeführt werden. Diese Informationen können abgespeichert werden und bei einer dementsprechenden Qualitätsabweichung kann auch eine Ausgabe bzw. Fehlerausgabe vorgenommen werden.

Des Weiteren lässt ein solches Monitoring von Parametern Rückschlüsse auf den Zustand der Mühle zu. Demzufolge kann aus den vermessenen und verglichenen Parametern zum Beispiel ein Rückschluss auf die Mahlleistung, den Mahlgrad und somit auf die Mahlqualität der Kaffeemühle vorgenommen werden. Demzufolge kann ab einer dementsprechend ermittelten Mahlqualität ein Reparaturservice oder ein Wartungsservice angefordert werden bzw. eine dementsprechende Information an den Benutzer ausgegeben werden.

Zur Durchführung der erforderlichen Soll-Ist-Vergleiche ist die Kaffeemaschine vorzugsweise mit einer Steuerung-, Regelungs- und Bedienvorrichtung ausgestattet, die einen programmierbaren, logischen Schaltkreis, wie zum Beispiel einen Mikrocontroller oder Prozessor, zur Datenverarbeitung und Steuerung/Regelung aufweist und/oder zumindest einen Datenspeicher zum Speichern von Ablaufprogrammen, von Geräteparametern, von Programmparametern und/oder historischen Informationen und/oder eine Datenschnittstelleneinrichtung zum Austausch von Informationen und/oder eine Ausgabeeinrichtung zur Information eines Benutzers und/oder eine Eingabeeinrichtung zur Bedienung der Steuerungs-, Regelungs- und Bedienvorrichtung und/oder einem elektrischen Energiespeicher.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: ein Brühzeit-Presskraft-Diagramm für unterschiedliche Mahlgrade,
- Fig. 2: ein Presskraft-Brühfluss-Diagramm für unterschiedliche Kaffeemehlmengen.

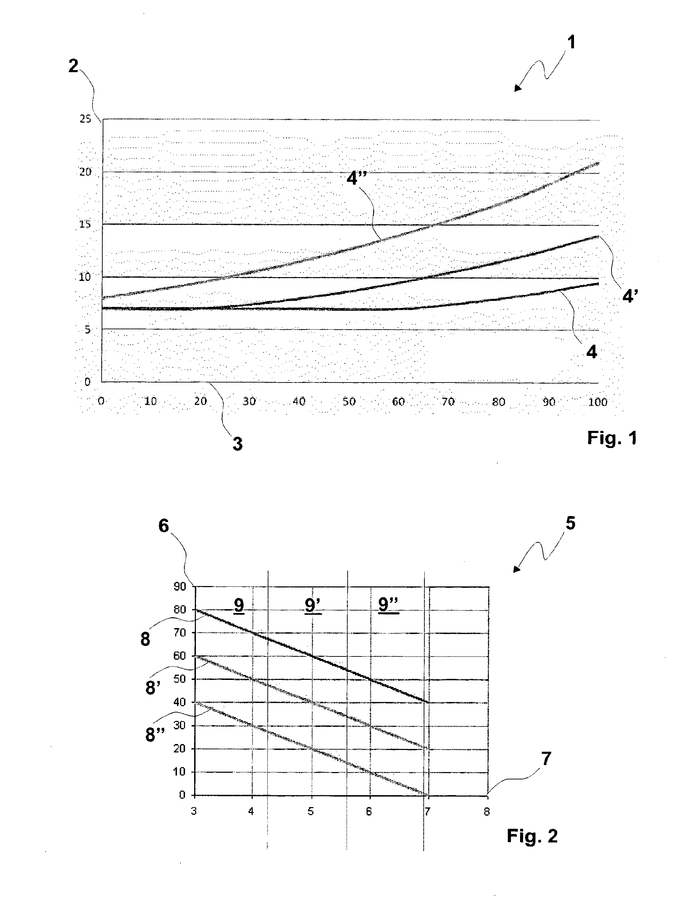

In dem in der Fig. 1 dargestellten Brühzeit-Presskraft-Diagramm 1 ist auf der Ordinate 2 die Brühzeit abgetragen, während auf der Abzisse 3 die Presskraft aufgetragen ist. In dem Diagramm sind drei Brühzeit-Presskraft-Kurven 4, 4', 4" für einen feinen Mahlgrad 4, einen mittleren Mahlgrad 4' und einen groben Mahlgrad 4" dargestellt. Dem Brühzeit-Presskraft-Diagramm 1 ist dabei zu entnehmen, dass die Brühzeit ansteigt, wenn die Presskraft zunimmt. Zudem ist bei gleichbleibender Presskraft und zunehmendem Mahlgrad die Brühzeit ebenfalls ansteigend.

Demzufolge lässt sich mit Einstellen des Mahlgrades und/oder mit Einstellen der Presskraft die Brühzeit auf den dementsprechenden Zielwert einstellen.

Das in der Fig. 2 dargestellte Presskraft-Wasserfluss-Diagramm 5 stellt die Abhängigkeit der Presskraft vom Wasserfluss und von der Kaffeemehlmenge dar. Auf der Ordinate 6 ist dabei die Presskraft abgetragen und auf der Abzisse 7 der Wasserfluss. Es sind in das Presskraft-Wasserfluss-Diagramm 5 drei Presskraft-Wasserfluss-Kurven 8, 8', 8" eingezeichnet. Der Kurvenverlauf der 8g-Kurve 8, der 12g-Kurve 8' und der 14g-Kurve 8" zeigt auf, dass bei einem dementsprechend vorgegebenen und gewünschten Wasserfluss mit zunehmender Kaffeemehlmenge (8g, 12g, 14g) die Presskraft verringert werden kann.

Nun kann man den Wasserfluss in unterschiedliche Qualitätsbereiche 9, 9', 9" des Kaffeebrühgetränkes einteilen. Je höher dabei der Wasserfluss, desto geringer ist die zu erwartende Qualität des Kaffeebrühgetränkes. So steht der Qualitätsbereich 9 für eine hohe Qualität, der Qualitätsbereich 9' für eine mittlere Qualität und der Qualitätsbereich 9" für eine geringe Qualität und für eine hohe Produktivität der Kaffeemaschine.

Demzufolge lässt sich die Qualität des Kaffeebrühgetränkes durch Anpassen der Kaffeemehlmenge und/oder der Presskraft einstellen.

## Patentansprüche

1. Verfahren zum Brühen von Kaffee in einer Kaffeemaschine, insbesondere in einer automatischen oder vollautomatischen Espressomaschine, bei dem Kaffeebohnen durch eine Mahleinrichtung der Kaffeemaschine zu Kaffeemehl einer vorbestimmten Kaffeemehlmenge und/oder eines vorbestimmten Mahlgrades gemahlen werden, wobei
- während eines Pressvorganges das Kaffeemehl in einer Brühkammer der Kaffeemaschine unter einer vorbestimmten Presskraft verpresst wird,
- während des Brühvorgangs eine auf eine vorbestimmte Brühtemperatur erhitzte, vorbestimmte Wassermenge durch das Kaffeemehl hindurchgeleitet und eine Ist-Brühzeit bestimmt wird,
- die Ist-Brühzeit mit einer hinterlegten Soll-Brühzeit verglichen wird,
- die Ist-Brühzeit durch Erhöhen/Reduzieren der Presskraft während des Brühvorgangs oder vor jedem neuen Brühen von Kaffee an die Soll-Brühzeit angepasst wird,
**dadurch gekennzeichnet, dass**
vor dem Pressvorgang das Kaffeemehl mit einer vorbestimmten Wassermenge befeuchtet wird.

2. Verfahren nach Anspruch 1,
**dadurch gekennzeichnet,**
**dass** vor der Zubereitung des Kaffees mittels Auswahl einer Rezeptur zumindest ein Parameter, umfassend einen Mahlgrad, eine Kaffeemehlmenge, eine Wassermenge, eine Brühzeit, einen Wasserstrom, eine Presskraft und/oder eine Brühtemperatur, vorgegeben wird.

3. Verfahren nach Anspruch 1 oder 2,
**dadurch gekennzeichnet,**
- **dass** die Presskraft aufgrund eines ermittelten Kaffeemehlvolumens der gemahlenen Kaffeemehlmenge und/oder aufgrund zumindest eines Zeitabstandes zu zumindest einer vorhergehenden Brühung angepasst wird, oder
- **dass** die Presskraft anhand eines aus vorhergehenden Brühvorgängen ermittelten Mittelwertes des Kaffeemehlvolumens der gemahlenen Kaffeemehlmenge angepasst wird.

4. Verfahren nach Anspruch 3,
**dadurch gekennzeichnet,**
**dass** das Kaffeemehlvolumen bzw. die Kaffeemehlmenge vor einer Befeuchtung durch eine Vorpressung ermittelt wird.

5. Verfahren nach einem oder mehreren der vorhergehenden Ansprüche, **dadurch gekennzeichnet,**
**dass** aufgrund des Vergleichs eines Ist-Brühzeit-/Presskraft-Wertepaares eines aktuellen Brühvorgangs mit einem Soll-Brühzeit-/Presskraft-Wertepaar aus einem Kennfeld und/oder mit einem Brühzeit-/PresskraftWertepaar zumindest eines vorhergegangenen Brühvorganges der Mahlgrad und/oder die Kaffeemehlmenge angepasst wird.

6. Verfahren nach einem oder mehreren der vorhergehenden Ansprüche, **dadurch gekennzeichnet,**
**dass** bei Inbetriebnahme und/oder bei Nachjustierung die Kaffeemaschine automatisch mittels zumindest einer Probezubereitung den Mahlgrad und/oder die Mehlmenge und/oder die Presskraft anpasst und damit die Brühzeit einstellt.

## Claims

1. A method for brewing coffee in a coffee machine, in particular in an automatic or fully-automatic espresso machine, in the case of which coffee beans are ground into coffee grounds of a predetermined coffee grounds quantity and/or of a predetermined grinding degree by means of a grinding device of the coffee machine, wherein
- the coffee grounds are pressed in a brewing chamber of the coffee machine under a predetermined pressing force during a pressing process,
- a predetermined water quantity, which is heated to a predetermined brewing temperature, is guided through the coffee grounds and an actual brewing time is determined during the brewing process,
- the actual brewing time is compared to a stored target brewing time,
- the actual brewing time is adapted to the target brewing time by increasing/reducing the pressing force during the brewing process or prior to every new brewing of coffee,
**characterized in**
**that** the coffee grounds are moistened by means of a predetermined water quantity prior to the pressing process.

2. The method according to claim 1, **characterized in that** at least one parameter, comprising a grinding degree, a coffee grounds quantity, a water quantity, a brewing time, a water flow, a pressing force and/or a brewing temperature is provided by selecting a recipe prior to preparing the coffee.

3. The method according to claim 1 or 2,
**characterized in**
- **that** the pressing force is adapted based a determined coffee grounds volume of the ground coffee quantity and/or based on at least one time interval to at least one preceding brewing, or
- **that** the pressing force is adapted based on an average value of the coffee grounds volume of the ground coffee grounds quantity, which is determined from preceding brewing processes.

4. The method according to claim 3, **characterized in that** the coffee grounds volume or the coffee grounds quantity, respectively, is determined prior to a moistening by means of a pre-pressing.

5. The method according to one or a plurality of the preceding claims, **characterized in that** the grinding degree and/or the coffee grounds quantity is adapted based on the comparison of an actual brewing time/pressing force value pair from an actual brewing process to a target brewing time/pressing force value pair from a characteristic diagram and/or to a brewing time/pressing force value pair of at least one preceding brewing process.

6. The method according to one or a plural of the preceding claims, **characterized in that** the coffee machine automatically adapts the grinding degree and/or the grinding quantity and/or the pressing force by means of at least one sample preparation and thus adjusts the brewing time in response to start-up and/or in response to readjustment.

## Revendications

1. Procédé d'infusion de café dans une machine à café, notamment dans une machine expresso automatique ou entièrement automatique, lors duquel des grains de café sont moulus par un moulin de la machine à café en une poudre de café d'une quantité prédéfinie de poudre de café et/ou d'une finesse de mouture prédéfinie,
- pendant un processus de pressage, la poudre de café étant pressée dans un compartiment d'infusion de la machine à café sous une force de pression prédéfinie,
- pendant le processus d'infusion, une quantité d'eau prédéfinie, chauffée à une température d'infusion prédéfinie étant conduite à travers la poudre de café et un temps réel d'infusion étant déterminé,
- le temps réel d'infusion étant comparé avec un temps d'infusion de consigne sauvegardé,
- le temps réel d'infusion étant adapté au temps d'infusion de consigne par augmentation/réduction de la force de pressage pendant le processus d'infusion ou avant chaque nouvelle infusion de café,
**caractérisé en ce qu'**avant le processus de pressage, la poudre de café est humidifiée avec une quantité d'eau prédéfinie.

2. Procédé selon la revendication 1, **caractérisé en ce qu'**avant la préparation du café, par sélection d'une formule, au moins un paramètre, comprenant une finesse de mouture, une quantité de poudre de café, une quantité d'eau, un temps d'infusion, un courant d'eau, une force de pression et/ou une température d'infusion est prédéfini.

3. Procédé selon la revendication 1 ou la revendication 2, **caractérisé**
- **en ce que** la force de pressage est adaptée sur la base d'un volume de poudre de café déterminé de la quantité de poudre de café moulue et/ou sur la base d'au moins un écart de temps par rapport à au moins une infusion précédente ou
- **en ce que** la force de pressage est adaptée à l'aide d'une valeur moyenne déterminée à partir de processus d'infusion précédents du volume de poudre de café de la quantité de poudre de café moulue.

4. Procédé selon la revendication 3, **caractérisé en ce que** le volume de poudre de café ou la quantité de poudre de café est déterminé(e) avant une humidification par un pressage préalable.

5. Procédé selon l'une quelconque ou plusieurs des revendications précédentes, **caractérisé en ce que** sur la base de la comparaison d'une paire de valeurs temps réel d'infusion/force de pressage d'un processus d'infusion actuel avec une paire de valeurs temps d'infusion de consigne/force de pressage d'un diagramme caractéristique et/ou avec une paire de valeurs temps d'infusion/force de pressage d'au moins un processus d'infusion précédent, la finesse de mouture et/ou la quantité de poudre de café est adaptée.

6. Procédé selon l'une quelconque ou plusieurs des revendications précédentes, **caractérisé en ce que** lors de la mise en service et/ou d'un réajustement, la machine à café adapte automatiquement au moyen d'au moins une préparation échantillon la finesse de mouture et/ou la quantité de poudre et/ou la force de pressage et règle de ce fait le temps d'infusion.
